# EUROPÄISCHE PATENTANMELDUNG

(11) **EP 1 605 629 A1**
(43) Veröffentlichungstag der Anmeldung: **14.12.2005**
(21) Anmeldenummer: 04013826.5
(22) Anmeldetag: 11.06.2004
(51) Int. Cl.: H04L 12/24, H04Q 1/06

(54) **Datenmodell zur Administration eines Telekommunikationsnetzes mit Kabelmanagement**

(71) Anmelder: Tenovis GmbH & Co. KG, 60362 Frankfurt am Main (DE)
(72) Erfinder: Schmidt, Ralf, 55262 Heidesheim (DE); Hemmerich, Thomas, 63477 Maintal (DE); Trunk, Rainer, 60388 Frankfurt Main (DE)
(74) Vertreter: Walkenhorst, Andreas

(57) **Zusammenfassung**

Vorgestellt wird ein Datenmodell 100, 118 zur Administration eines Telekommunikationsnetzes 60, 115 mit einer Telekommunikationsanlage 64 zur Bereitstellung von Leistungsmerkmalen für eine Mehrzahl von angeschlossenen Endgeräten 77, 78, wobei jedes Endgerät 77, 78 über eine Primärverkabelung 79, 75 mit einer Endgeräte-Anschlusseinrichtung 76, 74 einer Sekundärverkabelung 89 verbunden ist, die Sekundärverkabelung 89 mit der Telekommunikationsanlage verbunden ist, und die Endgeräte-Anschlusseinrichtung einem Port 71 der Telekommunikationsanlage zugeordnet ist, wobei das Datenmodell für Endgeräte ein Endgeräte-Objekt 81' mit einer Instanz für jedes Endgerät mit dessen Daten aufweist. Das Datenmodell weist weiterhin für Endgeräte-Anschlusseinrichtungen ein Access Point-Objekt 102, 102' mit einer Instanz für jede Endgeräte-Anschlusseinrichtung als Access Point mit deren Daten, und für die Sekundärverkabelung ein Netzwerk-Objekt 101, 120 mit deren Daten auf.

## Beschreibung

Die Erfindung betrifft ein Datenmodell zur Administration eines Telekommunikationsnetzes und ein Verfahren zur Administration einer Telekommunikationsanlage damit, und speziell die Administration der Verkabelung zwischen der Telekommunikationsanlage und einer Mehrzahl von daran angeschlossenen Endgeräten.

Telekommunikationsanlagen stellen den an sie angeschlossenen Teilnehmern bzw. Endgeräten Leistungsmerkmale zur Verfügung. Große private Telekommunikationsanlagen erreichen heute Ausbaustufen von über 10.000 Teilnehmern. Bisher werden private Telekommunikationsanlagen üblicherweise von einem einzigen Kunden oder Mandanten gekauft oder gemietet. Diese Anlagen bedienen einen Standort und sind über ein lokales Leitungsnetz mit allen Endgeräten verbunden, gegebenenfalls über eingefügte drahtlose Strecken. Mit Hilfe eines Rufnummernplans wird der Zusammenhang zwischen dem Port der Telekommunikationsanlage und der internen Rufnummer des Teilnehmers hergestellt. Anlagen desselben Kunden an demselben oder verschiedenen Standorten können miteinander vernetzt werden, wobei weiterhin eine Anlage und die daran angeschlossenen Endgeräte ein abgeschlossenes Subsystem bilden.

Moderne mandantenfähige Telekommunikationsanlagen für einen Multi-Company Einsatz können an einem lokalen Standort, häufig innerhalb eines Bürogebäudes oder eines Campusgeländes, von der zentralen Telekommunikationsanlage aus mehrere unabhängige Firmen bzw. Kunden bedienen. Das ebenfalls lokale Leitungsnetz mit den Endgeräten der verschiedenen Kunden kann einheitlich sein, z.B. in einem Bürohochhaus, oder in Teilnetze, z.B. für einzelne Kunden, gegliedert sein. Das Leitungsnetz mit seiner Vielzahl von Leitungen zwischen Anlage und Endgeräten entspricht im Multi-Company System dem oben beschriebenen lokalen Single-Company System einer Telekommunikationsanlage. Die verschiedenen Kunden werden durch Zuordnung bzw. Gruppenbildung von Endgeräten und Trennung der Gruppen voneinander separiert. Unter dem Aspekt der Administration des Leitungsnetzes zwischen Anlage und Endgeräten entspricht der Multi-Company Einsatz dem oben beschriebenen lokalen Single-Company Einsatz einer Telekommunikationsanlage und wird daher nicht vertiefend behandelt.

Eine mandantenfähige Telekommunikationsanlage wird entsprechend einem aktuell von der Anmelderin vorgestellten Service-Provider Konzept von mehreren Kunden an beliebigen Standorten mit einer Vielzahl von Endgeräten unabhängig voneinander genutzt. Dabei wird eine zentrale Telekommunikationsanlage mit Endgeräten an entfernten Standorten über ein WAN (Wide Area Network, Fernverbindungsnetzwerk) verbunden. Im Gegensatz zu den oben beschriebenen Systemen werden in diesem System die Leitungen des WAN von mehreren Kunden gleichzeitig genutzt. Das Leitungsnetz einschließlich WAN wurde bisher mit viel Aufwand wie im altbekannten Multi-Company System verwaltet.

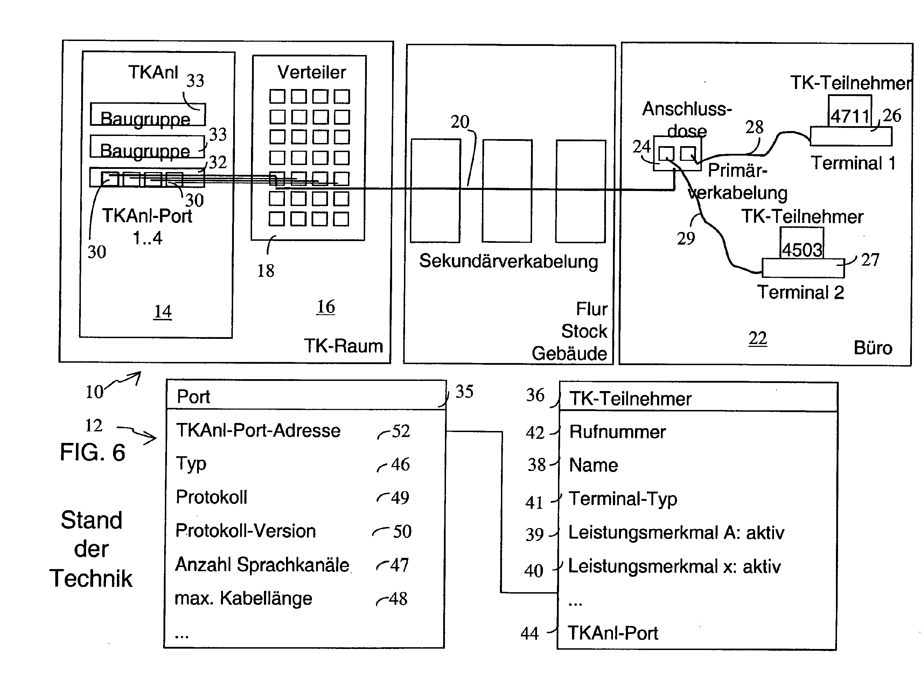

In diesen Szenarien ist beim heutigen Stand der Technik aus Sicht der Telekommunikations-Administration der Telekommunikationsanlage bzw. des Feature-Server eine Administration der Verkabelung innerhalb der Administration von Leistungsmerkmalen relativ uninteressant (ich weiß, dass ich das selbst so im Entwurf formuliert hatte, ich denke das sollten wir aber korrigieren: der Anwender würde sich natürlich über eine integrierte Administration von Leitungsnetz und Telekommunikations-Features in einem Tool freuen, nur hätte das einen hohen Entwicklungsaufwand bedeutet, weshalb wir es bei einem Nebeneinander von zwei Tools gelassen haben. Dies ist aber nur deshalb möglich, weil die zu administrierenden Daten (Leitungsnetz, Telekommunikations-Features) weitestgehend voneinander unabhängig sind. , da die nutzbaren Telekommunikations-Leistungsmerkmale von der Sekundärverkabelung einschließlich WAN / AN (Access Network, Zugangsnetzwerk) weitestgehend voneinander unabhängig sind. Wegen der höheren Übersichtlichkeit/Transparenz ist die Verkabelung auch nicht im Datenmodell von Telekommunikationsanlage, Feature Server und Telekommunikations-Administration abgebildet. Oftmals wird vom Kunden ein separates Kabelmanagementsystem eingesetzt, um die gesamte Verkabelung in seinen Räumlichkeiten zu planen und zu dokumentieren. In FIG. 6 ist ein Netzwerk mit einer Telekommunikationsanlage und dazugehörendem Datenmodell gemäß dem Stand der Technik abgebildet.

FIG. 6 zeigt den Aufbau eines privaten Telekommunikationsnetzes 10 mit vereinfachtem Datenmodell 12 der Leitungsverwaltung nach dem Stand der Technik im "klassischen" Szenario einer Telekommunikationsanlage 14, die in den Räumlichkeiten, TK-Raum 16, eines Kunden installiert ist. Die Telekommunikationsanlage beinhaltet einen internen oder externen Verteiler 18, von dem aus Kabel für Sprach- und /oder Datenkommunikation, Sekundärverkabelung 20 zu den Räumen, stellvertretend Büro 22, des Kunden abgehen. Die Sekundärverkabelung 20 endet an der Anschlussdose 24 im Büro 22 des Kunden. Dort werden die Endgeräte Terminal 1, 26 und Terminal 2, 27 der Telekommunikationsanlage über ihre Anschlusskabel 28, 29 angeschlossen. Die direkt an die Endgeräte angeschlossenen Anschlusskabel 28, 29 bilden die Primärverkabelung. In einigen Fällen erfolgt bei gegebener räumlicher Nähe und entsprechend dem technischen Aufbau des Verteilers auch ausnahmsweise der direkte Anschluss der Endgeräte an den Verteiler. Ein Endgerät 26, 27 wird über eine Verkabelung hinweg an einen der Telekommunikationsanlage-Ports 30 angeschlossen, der sich mit anderen Ports gleichen oder unterschiedlichen Typs auf einer Baugruppe 32 neben weiteren Baugruppen 33 der Telekommunikationsanlage 14 befindet.

Zur Administration von Telekommunikations-Leistungsmerkmalen/Diensten muss die Telekommunikationsanlage und deren Administrationssoftware im Themenbereich "Anschluss eines Endgerätes an einen Port" zumindest zwei Objekte verwalten, die im Datenmodell 12 abgebildet werden, nämlich den Telekommunikationsanlagen-Port 35 und den Telekommunikations-Teilnehmer 36. Teilnehmer und Endgerät werden hier synonym verwendet, da üblicherweise ein Endgerät einer Person zugeordnet ist und entsprechende die Person betreffende Daten in die Verwaltung des Endgeräts einbezogen werden.

Im Datenmodell 12 ist tabellarisch der logische Zusammenhang zwischen Telekommunikations-Teilnehmer und Port dargestellt, wenn durch die Telekommunikations-Administrationssoftware eine Zuordnung von Telekommunikations-Teilnehmer mit dessen Endgerät 26, 27 zu dem von ihm benutzten Telekommunikationsanlage-Port 30 durchgeführt werden soll.

Typische, zu administrierende Parameter eines Telekommunikations-Teilnehmers sind dessen Name 38, die für ihn aktivierten Leistungsmerkmale 39, 40, der angeschlossene Terminal-Typ 41 und weiteres. Als eindeutiges Merkmal zur Identifizierung und Administration eines Telekommunikations- Teilnehmers kann dessen Rufnummer 42 dienen, da diese innerhalb der Telekommunikationsanlage eindeutig sein muss. Schließlich wird der Port 44 identifiziert, über den eine Instanz des Datenmodell-Objekts Port 35 zugeordnet wird.

Einige der Leistungsmerkmale sind aber nicht an einen einzelnen Telekommunikations-Teilnehmer gebunden, sondern sie gelten aus technischen Gründen für alle Telekommunikations-Teilnehmer, welche am gleichen Port angeschlossen sind. Daher hat sich das Datenmodell-Objekt Port 35 als besonders geeignet erwiesen. So z.B. sind typische, zu administrierende Parameter eines Port dessen Typ 46 (analog, digital), die Anzahl der verfügbaren Sprachkanäle 47, die maximal zulässige Länge der Anschlusskabel 48, die Anzahl 49 und Version 50 der installierten Übertragungsprotokolle. Als eindeutiges Merkmal zur Identifizierung und Administration eines Port kann eine anlageninterne Telekommunikationsanlagen-Port-Addresse 52 verwendet werden, die eindeutig aus der Ordnungsnummer der Baugruppe sowie der Ordnungsnummer des Telekommunikationsanlage-Port auf der Baugruppe generiert werden kann.

Der Erfindung liegt nun die Aufgabe zugrunde, ein Datenmodell zur Administration eines Telekommunikationsnetzes und ein Verfahren zur Administration einer Telekommunikationsanlage als Einzelkundenanlage und auch als Feature Server bereitzustellen, welches die gegenüber einer Einzelkundenanlage zusätzliche Verkabelung zwischen einem Feature Server und einer Mehrzahl von daran angeschlossenen Endgeräten mit geringem Mehraufwand berücksichtigt und im Falle des Feature Servers von der WAN-Technologie (IP, ATM, ISDN) entkoppelt.

Diese Aufgabe wird durch ein Verfahren und eine Vorrichtung mit den Merkmalen der unabhängigen Patentansprüche gelöst. Bevorzugte Ausgestaltungen der Erfindung ergeben sich aus den abhängigen Ansprüchen.

Weitere vorteilhafte Ausführungsformen ergeben sich aus den weiteren Unteransprüchen und aus der nachfolgenden Beschreibung eines bevorzugten Ausführungsbeispiels, das anhand der Abbildungen näher erläutert wird. Hierbei zeigen:
- Fig. 1: schematisch den Aufbau eines Service-Provider Telekommunikationsnetzes mit Datenmodell der Leitungsverwaltung gemäß der Erfindung.
- Fig. 2: schematisch den Aufbau eines privaten Telekommunikationsnetzes mit einem weiteren Datenmodell der Leitungsverwaltung gemäß einer Ausgestaltung der Erfindung;
- Fig. 3: schematisch den Aufbau eines Service-Provider Telekommunikationsnetzes mit Datenmodell der Leitungsverwaltung gemäß der Erfindung;
- Fig. 4: ein Flussdiagramm eines Verfahrens zur Administration einer Telekommunikationsanlage gemäß der Erfindung;
- Fig. 5: ein Flussdiagramm einer Erweiterung des Verfahrens zur Administration einer Telekommunikationsanlage gemäß der Erfindung; und
- Fig. 6: schematisch den Aufbau eines privaten Telekommunikationsnetzes mit Datenmodell der Leitungsverwaltung nach dem Stand der Technik;

Teilnehmer und Endgerät werden in dieser Beschreibung synonym verwendet, da üblicherweise ein Endgerät einer Person zugeordnet ist und entsprechende die Person betreffende Daten in die Verwaltung des Endgeräts einbezogen werden. Die Begriffe Teilnehmer und Endgerät können denselben Sachverhalt kontextabhängig aus leicht verschiedenen Perspektiven darstellen, wie es dem Fachmann geläufig ist.

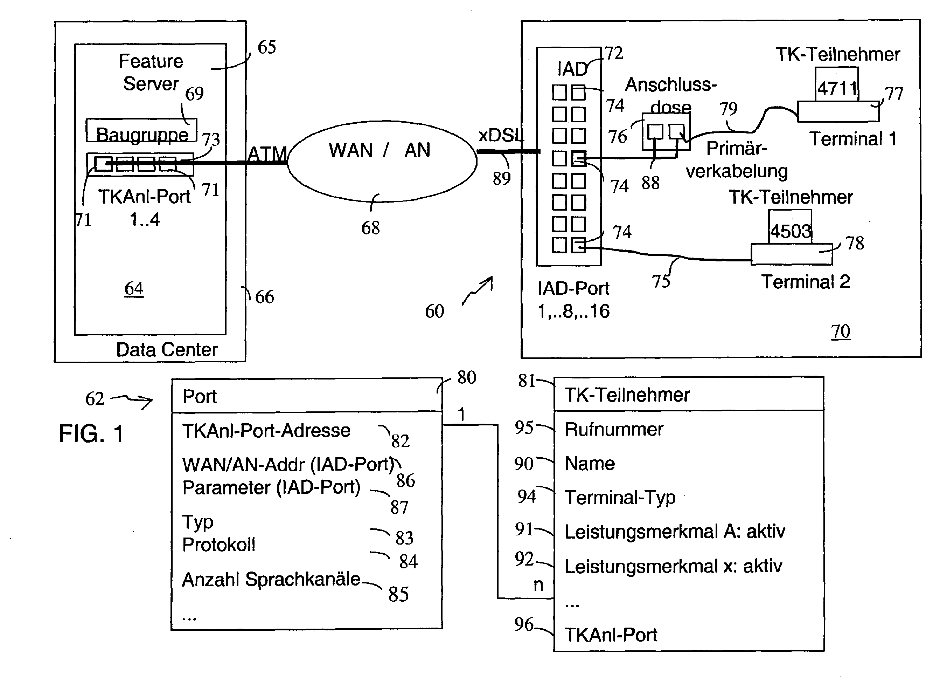

Fig. 1 zeigt den Aufbau eines Service-Provider Telekommunikationsnetzes 60 mit Datenmodell 62 der Leitungsverwaltung nach dem Stand der Technik mit einer Telekommunikationsanlage 64 als Feature-Server 65, welche in den Räumlichkeiten Data Center 66 eines Telekommunikations-Dienste-Anbieters installiert ist und von diesem auch betrieben wird. Die Telekommunikationsanlage 64 beruht vorzugsweise auf der Basis einer privaten Nebenstellenanlage (so genannte "private Technik") und stellt deren Leistungsmerkmale, insbesondere in Bezug auf die Vermittlungstechnik, bereit. Ein Kunde kauft bzw. zahlt für die Nutzung von Telekommunikations-Leistungsmerkmalen einer Telekommunikationsanlage. Mit einer Telekommunikationsanlage als Feature-Server können mehrere unabhängige Kunden bedient werden, die Telekommunikations-Leistungsmerkmale werden über ein WAN und AN (Access Network, Zugangsnetzwerk) 68 dem Kunden bereitgestellt. Der Abschluss des AN erfolgt in den Räumlichkeiten 70 des Kunden mit einem IAD 72 (Integrated Access Device, integrierte Zugangseinrichtung). In FIG. 1 wird beispielhaft ATM als WAN-Technologie und xDSL als AN-Technologie eingesetzt. Das IAD 72 bietet entsprechende Ports 74 als Schnittstellen zum Anschluss von analogen oder digitalen (ISDN) Endgeräten. Auch im Szenario Feature-Server geschieht der physikalische Anschluss der Endgeräte meist wie hier Terminal 1, 77 mittels Anschlusskabel 79 über eine Anschlussdose 76, die mit dem IAD über ein Kabel 88 verbunden ist. Möglich ist aber auch ein Anschluss wie hier Terminal 2, 78 direkt mittels Anschlusskabel 75 an das IAD 72 innerhalb der Räume (Büros) des Kunden als Primärverkabelung, dies wird jedoch als Ausnahme angesehen. Die Anschlussdosen sind dann wiederum mit den analogen oder digitalen Ports 74 des IAD 72 verkabelt. Ein Endgerät, z.B. Terminal 77, 78 wird über eine Verkabelung hinweg an einen der Telekommunikationsanlage-Ports 71 angeschlossen, der sich mit anderen Ports gleichen oder unterschiedlichen Typs auf einer Baugruppe 73 neben weiteren Baugruppen 69 des Feature-Servers 44 befindet.

Die Primärverkabelung umfasst wieder die direkt an die Endgeräte angeschlossenen Anschlusskabel 75, 79. Die Sekundärverkabelung 89 umfasst alle Kabel und Anschlusseinrichtungen zwischen den Telekommunikationsanlage-Ports 71 und den Anschlussdosen 76 in Räumen des Kunden einschließlich dem Fernübertragungsnetzwerk 68, der IAD 72 und der Anschlussdosen 76 samt Kabel 88.

Im Datenmodell 62 ist tabellarisch der logische Zusammenhang zwischen den Objekten Telekommunikations-Teilnehmer und Port dargestellt, wenn durch die Telekommunikations-Administrationssoftware eine Zuordnung von Telekommunikations-Teilnehmer bzw. Endgerät zu den von ihm benutzten Telekommunikationsanlage-Port durchgeführt werden soll. Der Einsatz einer Telekommunikationsanlage als Feature Server erfährt erfindungsgemäß eine erweiterte Modellierung und Administration im Datenmodell 62 mit einem Objekt Port 80, nun als IAD-Port, und einem Telekommunikations-Teilnehmer-Objekt 81. Neben der anlageninternen Telekommunikationsanlage-Port-Adresse 82, dem Typ 83 des Port und den Telekommunikationsanlagen-spezifischen Parametern wie Protokoll 84, Anz. Sprachkanäle 85, ... eines Telekommunikationsanlage-Port werden nun zusätzlich die netzwerk-seitigen WAN/AN-Adressen 86 und Parameter 87 für den IAD-Port 74 verwaltet. Als eindeutiges Merkmal zur Identifizierung und Administration eines Port kann eine anlageninterne Telekommunikationsanlagen-Port-Addresse 82 verwendet werden, die vorzugsweise eindeutig aus der Ordnungsnummer der Baugruppe sowie einer Ordnungsnummer des Telekommunikationsanlage-Port auf der Baugruppe generiert werden kann.

Die zu administrierenden Parameter eines Telekommunikations-Teilnehmer-Objekts 81 sind im Wesentlichen identisch mit denen des bekannten Telekommunikations-Teilnehmer-Objekts 36 aus FIG. 6, nämlich dessen Name 90, die für ihn aktivierten Leistungsmerkmale 91, 92, der angeschlossene Terminal-Typ 94 und weiteres. Als eindeutiges Merkmal zur Identifizierung und Administration eines Telekommunikations-Teilnehmers kann dessen Rufnummer 95 dienen, da diese innerhalb der Telekommunikationsanlage eindeutig sein muss. Schließlich wird der zugeordnete Port 96 identifiziert, über den eine Instanz des Datenmodell-Objekts Port 80 zugeordnet wird.

In dem Netzwerk und entsprechend im Datenmodell verbindet vorzugsweise das ATM-WAN ein Port der Telekommunikationsanlage mit einem IAD. Entsprechend wird vorteilhaft zwischen ATM-WAN und IAD ein xDSL Protokoll benutzt.

Aus Sicht des Benutzers mag das Objekt Port, an dem er sein Endgerät anschließt, die Anschlussdose sein, letztlich ist es für die Nutzung der Telekommunikations-Leistungsmerkmale ohne Bedeutung und aus Sicht der Telekommunikations-Administration unerheblich, ob man ein Datenmodell-Objekt Port lieber an der Baugruppe, an der Anschlussdose oder am Verteiler "sieht".

Erfindungsgemäß wurde erkannt, dass ein Zusammenfassen der Adressen und Parameter für IAD-Port und Telekommunikationsanlage-Port in einer einzigen Tabelle Port des Datenmodells möglich ist, um mit einer möglichst unveränderten Telekommunikationsanlagen- und Administrationssoftware das Szenario Feature-Server zu realisieren. Dieses Zusammenfassen der Adressen und Parameter für IAD-Port und Telekommunikationsanlage-Port ist sowohl dem Kunden als auch dem Telekommunikations-Administrator vermittelbar und wird deshalb auch im Rahmen des Arbeitens mit der Telekommunikations-Administrationssoftware akzeptiert, da für beide Anwender der IAD-Port und der Telekommunikationsanlage-Port physikalisch am IAD zusammenzufallen scheinen: in einem Fall administriert man die netzwerk-seitigen Parameter des Port in Richtung des WAN/AN, bzgl. IAD-Port, im anderen Fall administriert man für den gleichen Port die Parameter in Richtung Endgerät, bzgl. Telekommunikationsanlage-Port.

Somit zeigt FIG. 1 ein Datenmodell 62 zur Administration eines Telekommunikationsnetzes 60 mit einer Telekommunikationsanlage 64 zur Bereitstellung von Leistungsmerkmalen für eine Mehrzahl von angeschlossenen Endgeräten 77, 78, wobei jedes Endgerät über eine Primärverkabelung 79, 75 mit einer Endgeräte-Anschlusseinrichtung 76, 74 einer Sekundärverkabelung 89 verbunden ist, die Sekundärverkabelung mit der Telekommunikationsanlage verbunden ist, und die Endgeräte-Anschlusseinrichtung einem Port 71 der Telekommunikationsanlage zugeordnet ist, wobei das Datenmodell für Endgeräte ein Endgeräte-Objekt 81 mit einer Instanz für jedes Endgerät mit dessen Daten, und ein Objekt 80 mit einer Instanz für jede Endgeräte-Anschlusseinrichtung 76, 74 mit deren Daten aufweist. Das Datenmodell weist weiterhin Daten 86, 87 einer Fernnetzwerk-Sekundärverkabelung 68 auf.

Im Beispiel der FIG. 1 ist das Datenmodell 62 mittels einer zugrunde liegenden relationalen Datenbank realisiert. Die Beziehungen zwischen den Tabellen "Port" 80 und "TK-Teilnehmer" 81 sind 1:n-Relationen, wie an der Verbindungslinie angedeutet.

Man erkennt bei Vergleich des Datenmodells 62 mit dem bekannten Datenmodell 12 aus FIG. 6 als wesentlichen Vorteil dieser Erfindung, dass die Administration von Telekommunikations-Teilnehmer und Telekommunikationsanlage-Port im klassischen Szenario sich identisch gestaltet ist wie die Administration von Telekommunikations-Teilnehmer im Szenario Feature-Server. Alle von der WAN/AN-Technologie abhängigen Adressen und Parameter sind integriert in dem Objekt Port und können auch in der Telekommunikations-Administrationssoftware in einem separaten Software-Modul Port realisiert werden.

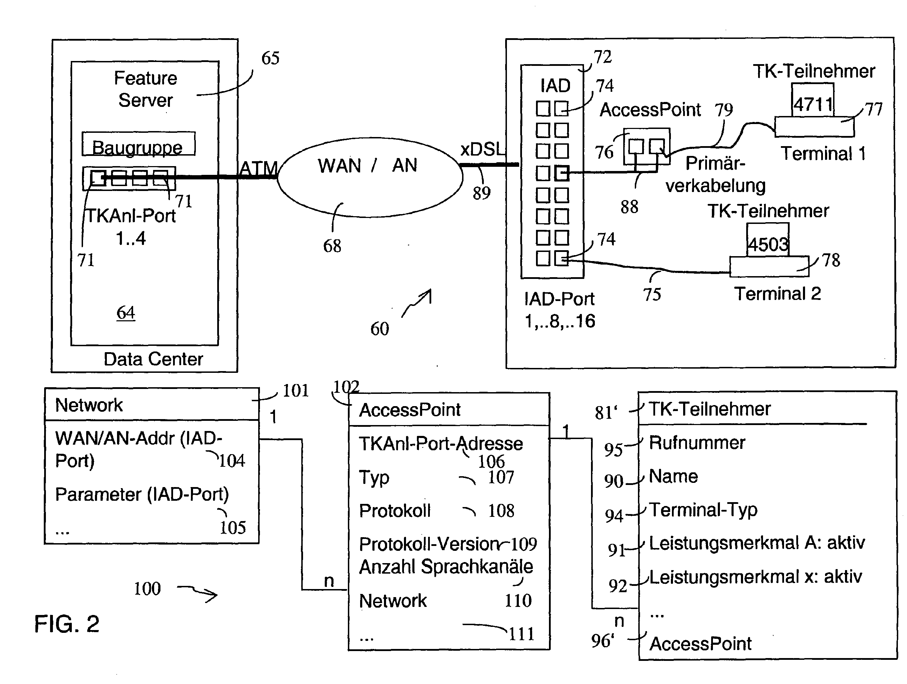

Fig. 2 zeigt den Aufbau des privaten Telekommunikationsnetzes 60 aus FIG. 1 mit einem weiteren bevorzugten Datenmodell 100 der Leitungsverwaltung gemäß der Erfindung. Das Datenmodell 100 weist drei Objekte Network 101, Access Point 102 und Telekommunikations-Tellnehmer 81' auf. Im Objekt Network 101 finden sich nun die Adressen 104 und Parameter 105 des IAD-Port 74 wieder und auf das Objekt Access Point 102 sind die Adresse 106 und Parameter Typ 107, Protokoll 108, Protokoll-Version 109, Anzahl Sprachkanäle 110 und Netzwerk 111 des Telekommunikationsanlage-Port 71 abgebildet.

Das Objekt Telekommunikations-Teilnehmer 81' ist ähnlich dem bereits aus FIG. 1 bekannten Objekt Telekommunikations-Teilnehmer 81. Die zu administrierenden Parameter des Telekommunikations-Teilnehmer-Objekts 81' sind im Wesentlichen identisch mit denen des bekannten Telekommunikations-Teilnehmer-Objekts 81 aus FIG. 1, nämlich dessen Name 90, die für ihn aktivierten Leistungsmerkmale 91, 92, der angeschlossene Terminal-Typ 94 und weiteres. Als eindeutiges Merkmal zur Identifizierung und Administration eines Telekommunikations- Teilnehmers kann dessen Rufnummer 95 dienen, da diese innerhalb der Telekommunikationsanlage eindeutig sein muss. In dieser Ausgestaltung wird an Stelle des zugeordneten Ports 96 in FIG. 1 nun in FIG. 2 der zugeordnete Access Point 96' identifiziert, über den eine Instanz des Datenmodell-Objekts Port 80 zugeordnet wird.

Im Beispiel der FIG. 2 ist das Datenmodell 100 mittels einer zugrunde liegenden relationalen Datenbank realisiert. Die Beziehungen zwischen den Tabellen "Network" 101 und "Access Point" 102 und die Beziehungen zwischen den Tabellen "Access Point" 102 und "TK-Teilnehmer" 81' sind ebenfalls 1:n-Relationen, wie durch Bezugselemente an den Verbindungslinien angedeutet.

Man erkennt bei Vergleich der neuen Tabelle Access Point und mit der ursprünglichen Tabelle Port als wesentlichen Vorteil dieser Ausgestaltung der Erfindung, der Entkopplung der Telekommunikations-Administration von der Access Network-Technologie, dass die Administration von Telekommunikations-Teilnehmer und Telekommunikationsanlage-Port im klassischen Szenario identisch gestaltet ist wie die Administration von Telekommunikations-Teilnehmer und Access Point im Szenario Feature-Server. Alle von der WAN/AN-Technologie abhängigen Adressen und Parameter sind gekapselt in dem Objekt Network und können auch in der Telekommunikations-Administrationssoftware in einem separaten Software-Modul Network realisiert werden.

Mit dieser Ausgestaltung der Erfindung wird verhindert, dass eine Vermischung von WAN/AN-Parametern und Telekommunikations-Leistungsmerkmalen stattfindet, und vermeidet bei einem Technologiewechsel einen recht erheblichen Änderungsaufwand im Datenmodell, der sich daraus ergibt, dass es sich hier nur um einen Ausschnitt aus dem Gesamtdatenmodell einer Telekommunikationsanlage/Administrationssoftware handelt und eine Vielzahl weiterer Tabellen sich an die Port-Tabelle anschließen.

Diese Ausgestaltung der Erfindung beschreibt die Einführung von logischen Access Points im Datenmodell von Telekommunikationsanlage/Feature Server und Telekommunikations-Administration. Der Anschluss eines Endgerätes erfolgt nun aus Sicht der Telekommunikations-Administration an einen logischen Access Point, dessen physikalisches Abbild man sich nach wie vor am besten als Anschlussdose im Büro vorstellt, anstatt an einen Port der Baugruppe/des Verteilers wie im bekannten Szenario Telekommunikationsanlage nach FIG. 6 oder an einen Port des IAD wie im Szenario Feature-Server nach FIG. 1.

Speziell im Szenario Feature-Server erzielt man somit eine Entkopplung der Telekommunikations-Administrationsdaten von der Access Network-Technologie, denn eine Administration der IAD-Ports oder der Zuordnung zwischen IAD-Ports und den daran angeschlossenen Endgeräten beinhaltet notwendigerweise eine Modellierung der entsprechenden Objekte IAD und IAD-Port, welche bedingt sind durch den Einsatz der ATM/xDSL-Technologie im WAN/AN.

Ein Technologiewechsel z.B. von einem leitungsgebundenen Telefonie-Netzwerk zu IP-Backbone (im WAN) und Long-Reach-Ethernet (im Bereich des AN) würde ohne die Erfindung des logischen Access Point eine vollständig neue Modellierung in Telekommunikationsanlage, Feature-Server und Telekommunikations-Administration nach sich ziehen.

Somit zeigt FIG. 2 ein Datenmodell zur Administration eines Telekommunikationsnetzes mit einer Telekommunikationsanlage zur Bereitstellung von Leistungsmerkmalen für eine Mehrzahl von angeschlossenen Endgeräten, wobei jedes Endgerät über eine Primärverkabelung mit einer Anschlussdose verbunden ist, jede Anschlussdose über eine Sekundärverkabelung mit der Telekommunikationsanlage verbunden ist, und jede Anschlussdose einem Port der Telekommunikationsanlage zugeordnet ist, wobei das Datenmodell für Endgeräte ein Endgeräte-Objekt mit einer Instanz für jedes Endgerät mit dessen Daten aufweist. Das Datenmodell weist weiterhin für Anschlussdosen ein Access Point-Objekt mit einer Instanz für jede Anschlussdose als Access Point mit deren Daten, und für die Sekundärverkabelung ein Netzwerk-Objekt mit einer Instanz für jede Sekundärverkabelung als Netzwerk mit deren Daten auf.

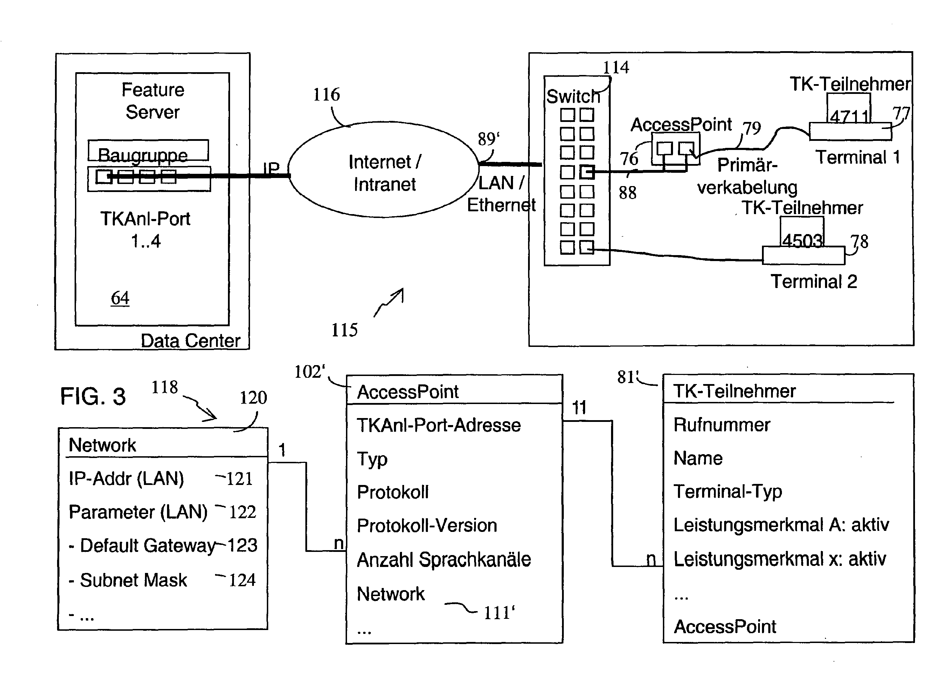

Fig. 3 zeigt den Aufbau eines Service-Provider Telekommunikationsnetzes 115 mit IP-Backbone / LAN / Ethernet als Fernübertragungsnetzwerk 116 mit einem Datenmodell 118 der Leitungsverwaltung gemäß der Erfindung. Im Vergleich zu FIG. 2 hat sich nur das Fernübertragungsnetzwerk 116 geändert und das IAD ist durch eine Schaltvorrichtung Switch 114 ersetzt worden entsprechend dem ankommenden definierten Übertragungsprotokoll. In diesem Telekommunikationsnetz 110 erfolgt die Kommunikation zwischen dem Feature-Server 64 und dem Fernübertragungsnetzwerk 116 nach dem Internet Protokoll IP und zwischen dem Fernübertragungsnetzwerk 116 und dem Switch 114 nach dem LAN/Ethernet Protokoll.

Im Datenmodell 118 wird das Fernübertragungsnetzwerk 116 durch ein Modul bzw. Objekt Netzwerk 120 repräsentiert, während das Objekt Access Point 102' im Wesentlichen diem Objekt Access Point 102 aus FIG: 2 entspricht, und das Objekt Teilnehmer 81' identisch mit dem aus FIG. 2 ist. Im Objekt Access Point 102' ist lediglich der Netzwerk-Parameter 111' geändert worden. Das Objekt Netzwerk 120 bildet das Fernübertragungsnetzwerk 116 mit der IP-Adresse IP-Addr (LAN) 121 und weiteren Parametern 122 ab, die wiederum unterteilt werden können und beispielsweise ein Default Gateway 123 und eine Subnet Mask 124 aufweisen können.

Im Beispiel der FIG. 3 ist das Datenmodell 118 wiederum mittels einer zugrunde liegenden relationalen Datenbank realisiert. Die Beziehungen zwischen den Tabellen "Network" 120 und "Access. Point" 102' und die Beziehungen zwischen den Tabellen "Access Point" 102' und "TK-Teilnehmer" 81' sind ebenfalls 1:n-Relationen, wie an den Verbindungslinien angedeutet.

Die Sekundärverkabelung 89' umfasst alle Kabel und Anschlusseinrichtungen zwischen den Telekommunikationsanlage-Ports 71 und den Anschlussdosen 76 in Räumen des Kunden einschließlich dem Fernübertragungsnetzwerk 116, der Switche 114 und der Anschlussdosen 76 samt Kabel 88. Die Sekundärverkabelung weist vorteilhaft ein Gebäude-Leitungsnetz auf.

Bei Wechsel von der WAN/AN-Technologie aus FIG. 2 zu einer anderen Fernübertragungsnetzwerk-Technologie, z.B. IP-Backbone / Long-Reach-Ethernet nach FIG. 3 ist nur das Modul Network 120 anzupassen, die umfangreichen und vielfältigen Telekommunikations-Leistungsmerkmale/Dienste und deren Administrationsdaten 81' bleiben von diesem Wechsel unberührt:

Vorteilhafterweise kann gemäß dieser Ausgestaltung der Erfindung die Modellierung und Administration von Access Points auf das klassische Szenario mit einer Telekommunikationsanlage/einem Kunden übertragen werden, indem das Software-Modul zur Administration des Netzwerks einfach in der Software ausgeblendet wird.

Erfindungsgemäß kann mit Hilfe der Modellierung und Administration von Access Points nicht nur rückwirkungsfrei auf eine neue IP-basierte WAN/AN-Technologie gewechselt werden, auch kann die ISDN-Technologie des klassischen Szenarios zukünftig auf eine Telekommunikationsanlage als Feature-Server übertragen werden, indem das Netzwerk dann lediglich die Parameter und Adressen des ISDN-basierten WAN/AN zu beinhalten hat.

Dem Access Point kann als Parameter ein Name zugeordnet werden, der mit Hilfe der Telekommunikations-Administrations-Software auf einen Beschriftungsstreifen ausgedruckt und auf die Anschlussdose geklebt werden kann. Somit kann der Kunde in den Büros kennzeichnen und leicht ersehen, an welchen physikalischen Access Point er sein Endgerät anschließt. Dies erleichtert eine Störungsbearbeitung über ferne Call Center ungemein.

Ein Kunde, der seine Endgeräte aufgrund der räumlichen Nähe direkt an IAD-Ports anschließen kann, sieht den logischen Access Point einfach als IAD-Port an und nutzt die Namensgebung als zusätzliche Dokumentations-/Informationsmöglichkeit und verwendet ausgedruckte Beschriftungsstreifen zur Kennzeichnung der IAD-Ports. Dieser Access Point als IAD-Port kann in der Bedienoberfläche der Telekommunikations-Administrationssoftware unterstützt werden, indem für diese Kunden der Begriff Access Point durch IAD-Port sichtbar ersetzt wird.

Ein Umzug innerhalb der Telekommunikations-Administrationssoftware kann mit der Einführung des Access Point nun so realisiert werden, wie ihn der Kunde in der Praxis auch selbst durchführt: ein Umzug eines Telekommunikations-Teilnehmers auf einen anderen Telekommunikationsanlage-Port findet statt, indem der Telekommunikations-Teilnehmer einfach einem anderen Access Point zugeordnet bzw. an einen anderen Access Point gesteckt wird, anstatt wie bisher auf einen anderen Telekommunikationsanlage-Port umgezogen wird.

In einigen Fällen kann der Kunde sich entscheiden, auf den Einsatz eines zusätzlichen Kabelmanagement-Systems zu verzichten, wenn ihm die neu angebotene Administrationsmöglichkeit von Access Points ausreicht.

Im Netzwerk und entsprechend im Datenmodell nach der in FIG. 3 gezeigten Ausgestaltung weist eine Sekundärverkabelung ein IP-WAN auf. Vorteilhaft verbindet das ATM-WAN ein Port der Telekommunikationsanlage mit einem LAN/Ethernet Switch.

Somit zeigen FIG. 2 und FIG. 3 ein Datenmodell 100, 118 zur Administration eines Telekommunikationsnetzes 60, 115 mit einer Telekommunikationsanlage 64 zur Bereitstellung von Leistungsmerkmalen für eine Mehrzahl von angeschlossenen Endgeräten 77, 78, wobei jedes Endgerät 77, 78 über eine Primärverkabelung 79, 75 mit einer Endgeräte-Anschlusseinrichtung 76, 74 einer Sekundärverkabelung 89 verbunden ist, die Sekundärverkabelung 89 mit der Telekommunikationsanlage verbunden ist, und die Endgeräte-Anschlusseinrichtung einem Port 71 der Telekommunikationsanlage zugeordnet ist, wobei das Datenmodell für Endgeräte ein Endgeräte-Objekt 81' mit einer Instanz für jedes Endgerät mit dessen Daten aufweist. Das Datenmodell weist weiterhin für Endgeräte-Anschlusseinrichtungen ein Access Point-Objekt 102, 102' mit einer Instanz für jede Endgeräte-Anschlusseinrichtung als Access Point mit deren Daten, und für die Sekundärverkabelung ein Netzwerk-Objekt 101, 120 mit deren Daten auf.

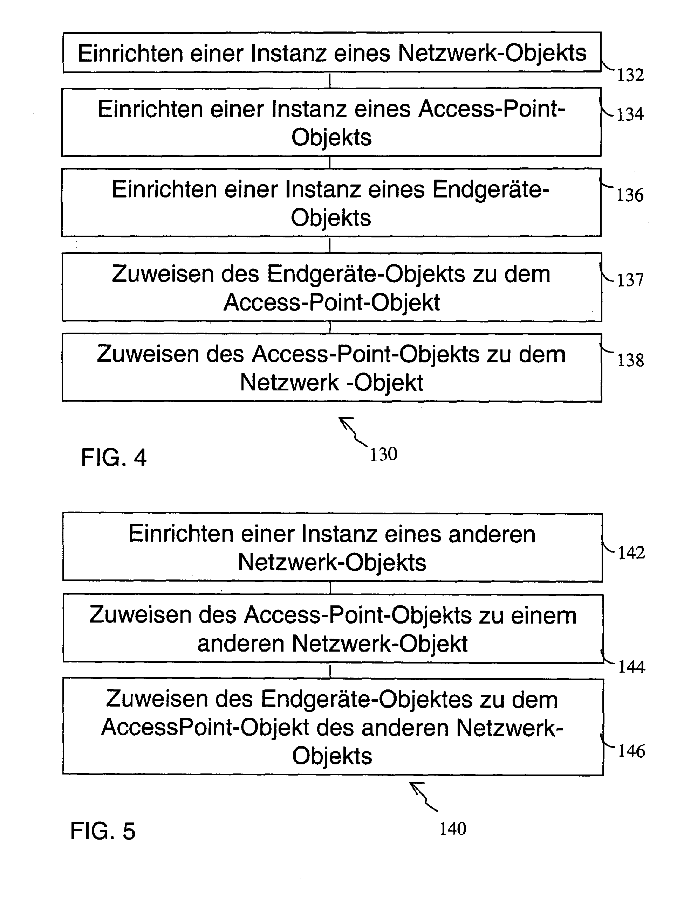

In Fig. 4 ist ein Flussdiagramm 130 eines Verfahrens zur Administration einer Telekommunikationsanlage gemäß der Erfindung mit einem Datenmodell nach wie in FIG. 2 gezeigt dargestellt. Im Verfahrensschritt 132 wird eine Instanz eines Netzwerk -Objekts 101; 120 für ein Netzwerk 68, 116 eingerichtet. Im Verfahrensschritt 134 wird eine Instanz eines Access Point-Objekts 102; 102' für einen Access Point 76 eingerichtet. Im Verfahrensschritt 136 wird dann eine Instanz eines Endgeräte-Objekts 81' für ein Endgerät 77, 78 eingerichtet. Im Verfahrensschritt 137 wird das Endgeräte-Objekt 81' dem Access Point-Objekt 102; 102' zugewiesen und im Verfahrensschritt 138 wird das Access Point-Objekt 102; 102' dem Netzwerk -Objekt 101; 120 zugewiesen.

Auf diese Weise kann ein Telekommunikationsnetz derart konfiguriert werden, dass die Teilnehmer, die Anschlusseinrichtungen und die Sekundärverkabelung als eigenständige Objekte im Wesentlichen getrennt voneinander administriert werden. Somit kann dasselbe Administrationsverfahren und -werkzeug für verschiedenartige Netzwerke verwendet werden.

Ein wesentlicher Vorteil der Erfindung ist nämlich, dass man jederzeit einen beliebigen Teilnehmer einem der existierenden Access Point zuweisen kann oder den Teilnehmer von einem Access Point auf den anderen Access Point umziehen kann. Das Umziehen eines Teilnehmers ist eine sehr häufig vorkommende Administrationsaufgabe in Unternehmen, nämlich immer wenn ein Mitarbeiter in ein anderes Büro erhält und dort weiterhin unter seiner bisherigen Telefonnummer erreichbar sein soll. Der Teilnehmeranschluss bzw. das Endgerät des Teilnehmers zieht dann verwaltungsmäßig mit um. Dies kann als Teilschritt hardwaremäßig das Trennen von einem Access Point und Neuanschließen an einem anderen Access Point beinhalten, oder in den Büros vorhandene Endgeräte erhalten lediglich andere Zuordnungen.

In Fig. 5 ist ein Flussdiagramm 140 einer erfindungsgemäßen Erweiterung des Verfahrens zur Administration einer Telekommunikationsanlage aus FIG. 4 dargestellt. Die Erweiterung wird am Beispiel eines Wechsels von dem Netzwerk 68 in FIG. 2 zu dem Netzwerk 116 in FIG. 3 erläutert. Im Verfahrensschritt 142 wird eine Instanz eines Netzwerk -Objekts 120 für ein anderes Netzwerk 116 eingerichtet. Dieses andere Netzwerk 116 soll in Zukunft genutzt werden. Im Verfahrensschritt 144 wird einem Access Point-Objekt das andere Netzwerk 116 zugewiesen.

In einem ersten Fall wird ein einem Netzwerk zugeordneter Access Point einem anderen Netzwerk zugeordnet, entsprechend wird das Access Point-Objekt neu zugeordnet, z.B. bisher 102; neu 102'. In diesem ersten Fall bliebe die Primärverkabelung unverändert.

In einem zweiten Fall wird im Verfahrensschritt 146 das Endgeräte-Objekt 81' zu dem Access Point-Objekt 102' des anderen Netzwerk-Objekts 120 zugeordnet. In diesem Fall wird also das Endgerät in eine andere Anschlussdose eingesteckt. Die Variante, ein Endgerät einem anderen AccessPoint zuzuweisen, ist in der Praxis bevorzugt, da der Benutzer die Primärverkabelung selbst durch einfaches Umstecken ändern kann. In beiden Fällen ist ein Technologiewechsel von einem Sekundärnetzwerktyp zu einem anderen einfach administrierbar.

Unter einem anderen Aspekt der vorliegenden Erfindung wird zu dem in FIG. 1 gezeigten Netzwerk und Datenmodell ein Verfahren zur Administration einer Telekommunikationsanlage vorgeschlagen mit Verfahrensschritten
- Eingeben von Daten 86, 87 eines Fernnetzwerk-Sekundärnetzwerks 68 in das Datenmodell 62;
- Einrichten einer Instanz eines Objekts 80 für eine Anschlusseinrichtung 76; und
- Einrichten einer Instanz eines Endgeräte-Objekts 81 für ein Endgerät 77, 78. Dieser Aspekt der vorliegenden Erfindung stellt auf die enorme Vereinfachung der Verwaltung eines in ein vorzugsweise privates Telekommunikationsnetzwerk eingebundenen Fernnetzwerk-Sekundärnetzwerks ab.

Die Ausführung der Erfindung ist nicht auf das beschriebene Beispiel und die oben hervorgehobenen Aspekte beschränkt, sondern im Rahmen der Ansprüche ebenso in einer Vielzahl von Abwandlungen möglich, die im Rahmen fachgemäßen Handelns liegen.

### Bezugszeichenliste

Telekommunikationsnetz 10
Datenmodell 12
Telekommunikationsanlage 14
TK-Raum 16
Verteiler 18
Sekundärverkabelung 20
Büro 22
Anschlussdose 24
Terminal 26, 27
Anschlusskabel 28,29
Telekommunikationsanlage-Port 30
Baugruppe 32
weiteren Baugruppen 33
Telekommunikationsanlagen-Port 35
Teilnehmer 36
Name 38
Leistungsmerkmale 39, 40
Terminal-Typ 41
Rufnummer 42
Port 44
Port Typ 46
Sprachkanäle 47
Anschlusskabel 48
Anzahl Übertragungsprotokolle 49
Version Übertragungsprotokoll 50
Telekommunikationsanlagen-Port-Addresse 52
Telekommunikationsnetz 60
Datenmodell 62
Telekommunikationsanlage 64
Feature-Server 65
Data Center 66
WAN und AN 68
Räumlichkeiten 70
Telekommunikationsanlage-Port 71
IAD 72
Baugruppe 73
Ports 74
Anschlusskabel 75
Anschlussdose 76
Terminal 77, 78
Anschlusskabel 79
Objekt Port 80
Objekt Teilnehmer 81, 81'
Telekommunikationsanlage-Port-Adresse 82 Typ Port 83
Protokoll 84
Sprachkanäle 85
WAN/AN-Adressen-86
Parameter 87
Kabel 88
Sekundärverkabelung 89
Name 90
Leistungsmerkmale 91, 92
Terminal-Typ 94
Port 96, 96'
Datenmodell 100
Objekt Network 101
Objekt Access Point 102, 102'
Parameter 105
Adresse 106
Parameter Typ 107
Protokoll 108
Protokoll-Version 109
Anzahl Sprachkanäle 110
Netzwerk 111, 111'
Switch 114
Telekommunikationsnetz 115
Fernübertragungsnetzwerk 116
Datenmodell 118
Objekt Netzwerk 120
IP-Adresse 121
Gateway 123
Subnet Mask 124
Flussdiagramm 130, 140
Verfahrensschritt 132, 134, 136, 142, 144, 146

## Patentansprüche

1. Datenmodell (100, 118) zur Administration eines Telekommunikationsnetzes (60, 115) mit einer Telekommunikationsanlage (64) zur Bereitstellung von Leistungsmerkmalen für eine Mehrzahl von angeschlossenen Endgeräten (77, 78), wobei jedes Endgerät (77, 78) über eine Primärverkabelung (79, 75) mit einer Endgeräte-Anschlusseinrichtung (76, 74) einer Sekundärverkabelung (89) verbunden ist, die Sekundärverkabelung (89) mit der Telekommunikationsanlage verbunden ist, und die Endgeräte-Anschlusseinrichtung einem Port (71) der Telekommunikationsanlage zugeordnet ist, wobei das Datenmodell für Endgeräte ein Endgeräte-Objekt (81') mit einer Instanz für jedes Endgerät mit dessen Daten aufweist, **dadurch gekennzeichnet, dass** das Datenmodell weiterhin für Endgeräte-Anschlusseinrichtungen ein Access Point-Objekt (102, 102') mit einer Instanz für jede Endgeräte-Anschlusseinrichtung als Access Point mit deren Daten, und für die Sekundärverkabelung ein Netzwerk-Objekt (101, 120) mit deren Daten aufweist.

2. Datenmodell nach Anspruch 1, wobei die Telekommunikationsanlage (64) ein Feature-Server für mehrere unabhängige Kundennetzwerke ist.

3. Datenmodell nach Anspruch 1 oder 2, wobei eine Sekundärverkabelung (89) ein Gebäude-Leitungsnetz aufweist.

4. Datenmodell nach Anspruch 1 oder 2, wobei eine Sekundärverkabelung (89) ein ATM-WAN (68) aufweist.

5. Datenmodell nach Anspruch 4, wobei das ATM-WAN (68) ein Port der Telekommunikationsanlage (71) mit einem IAD (72) verbindet.

6. Datenmodell nach Anspruch 5, wobei zwischen ATM-WAN (68) und IAD (72) ein xDSL Protokoll benutzt wird.

7. Datenmodell nach Anspruch 1 oder 2, wobei eine Sekundärverkabelung (89') ein IP-WAN (116) aufweist.

8. Datenmodell nach Anspruch 7, wobei das IP-WAN (116) ein Port (71) der Telekommunikationsanlage mit einem LAN/Ethernet Switch (114) verbindet.

9. Datenmodell nach Anspruch 8, wobei zwischen IP-WAN und IAD ein LAN/Ethernet Protokoll benutzt wird.

10. Datenmodell nach Anspruch 1, wobei das Access Point-Objekt einen Namen des Access Points aufweist.

11. Verfahren zur Administration einer Telekommunikationsanlage mit einem Datenmodell nach einem der Ansprüche 1 bis 10, mit den Verfahrensschritten
- Einrichten (132) einer Instanz eines Netzwerk -Objekts (101; 120) für ein Netzwerk (68, 116);
- Einrichten (134) einer Instanz eines Access Point-Objekts (102; 102') für einen Access Point (76);
- Einrichten (136) einer Instanz eines Endgeräte-Objekts (81') für ein Endgerät (77, 78)
- Zuweisen (137) des Endgeräte-Objekts (81') zu dem Access Point-Objekt (102; 102') und
- Zuweisen (138) des Access Point-Objekts (102; 102') zu dem Netzwerk - Objekt (101; 120).

12. Verfahren nach Anspruch 11, mit den weiteren Verfahrensschritten
- Einrichten (142) einer Instanz eines anderen Netzwerk-Objekts (120) für ein anderes Netzwerk (116); und
- Zuweisen (144) des Access Point-Objekt (102; 102') zu dem anderen Netzwerk-Objekt (120).

13. Verfahren nach Anspruch 11, mit den weiteren Verfahrensschritten
- Einrichten (142) einer Instanz eines anderen Netzwerk-Objekts (120) für ein anderes Netzwerk (116);
- Zuweisen (144) eines Access Point-Objekt (102') zu dem anderen Netzwerk-Objekt (120); und
- Zuweisen (146) des Endgeräte-Objekts (81') zu dem Access Point-Objekt (102') des anderen Netzwerk-Objekts (120).

14. Datenmodell (62) zur Administration eines Telekommunikationsnetzes (60) mit einer Telekommunikationsanlage (64) zur Bereitstellung von Leistungsmerkmalen für eine Mehrzahl von angeschlossenen Endgeräten (77, 78), wobei jedes Endgerät über eine Primärverkabelung (79, 75) mit einer Endgeräte-Anschlusseinrichtung (76, 74) einer Sekundärverkabelung (89) verbunden ist, die Sekundärverkabelung mit der Telekommunikationsanlage verbunden ist, und die Endgeräte-Anschlusseinrichtung einem Port (71) der Telekommunikationsanlage zugeordnet ist, wobei das Datenmodell für Endgeräte ein Endgeräte-Objekt (81) mit einer Instanz für jedes Endgerät mit dessen Daten, und ein Objekt (80) mit einer Instanz für jede Endgeräte-Anschlusseinrichtung (76, 74) mit deren Daten aufweist,
**dadurch gekennzeichnet, dass** das Datenmodell weiterhin Daten (86, 87) einer Fernnetzwerk-Sekundärverkabelung (68) aufweist.

15. Verfahren zur Administration einer Telekommunikationsanlage mit einem Datenmodell nach Anspruch 14, mit den Verfahrensschritten
- Einrichten einer Instanz eines Objekts (80) für eine Anschlusseinrichtung (76);
- Einrichten einer Instanz eines Endgeräte-Objekts (81) für ein Endgerät (77, 78); und
- Eingeben von Daten (86, 87) eines Fernnetzwerk-Sekundärnetzwerks (68) in das Datenmodell (62).
